## Europäisches Patentamt
## European Patent Office
## Office européen des brevets

(19)

(11) Numéro de publication: **0 148 524 B1**

(12) **FASCICULE DE BREVET EUROPEEN**

(45) Date de publication du fascicule du brevet:
**20.04.88**

(21) Numéro de dépôt: **84201794.9**

(22) Date de dépôt: **04.12.84**

(51) Int. Cl.⁴: **C 07 C 85/26,** C 01 D 7/16,
C 01 D 7/12

(54) **Procédé pour régénérer une solution organique d'une base organique azotée insoluble dans l'eau a partir d'une solution organique de son chlorhydrate et procédé pour la production de bicarbonate de métal alcalin.**

(30) Priorité: **16.12.83 FR 8320330**

(43) Date de publication de la demande:
**17.07.85 Bulletin 85/29**

(45) Mention de la délivrance du brevet:
**20.04.88 Bulletin 88/16**

(84) Etats contractants désignés:
**AT BE CH DE GB IT LI LU NL SE**

(56) Documents cités:
**GB - A - 1 082 436**

**CHEMICAL ABSTRACTS, vol. 83, no. 8, 25 août 1975, page 271, résumé no. 62821r, Columbus, Ohio, US; L. SOFRINA et al.: "Recovery of ammonia from ammonium chloride in soda production using calcium carbonate" CHEMICAL ABSTRACTS, vol. 96, no. 18, 3 mai 1982, page 159, résumé no. 145423g, Columbus, Ohio, US**

(73) Titulaire: **SOLVAY & Cie (Société Anonyme), Rue du Prince Albert, 33, B-1050 Bruxelles (BE)**

(72) Inventeur: **Ninane, Léon, Rue Laennec 1, F-54110 Dombasle-sur-Meurthe (FR)**
Inventeur: **Breton, Claude, Rue Pierre Breton 5, F-54110 Dombasle-sur-Meurthe (FR)**

## Description

L'invention est relative à un procédé pour la régénération de solutions organiques de bases organiques azotées insolubles dans l'eau, telles que des amines par exemple, à partir de solutions organiques de chlorhydrate de ces bases.

On connaît une technique pour la fabrication de bicarbonate de sodium selon laquelle on mélange une solution aqueuse de chlorure de sodium et une solution organique d'une amine insoluble dans l'eau, on traite le mélange résultant avec un gaz contenant de l'anhydride carbonique, puis le soumet à une décantation pour séparer une suspension aqueuse de bicarbonate de sodium, que l'on recueille, et une solution organique de chlorhydrate d'amine (brevet GB-A-1 082 436 (KAISER ALUMINUM & CHEMICAL CORPORATION), page 2, lignes 105 à 125; Central Patents Index, Basic Abstracts Journal, Section E, Week T. 49, Derwent Publication Ltd., Londres, abrégé 78430T-E: demande de brevet JP-A-7 241 237 (Israël Mining Inds. Inst. Res. & Dev.) .

Dans la suite de la description, l'expression «technique aux amines» désignera cette technique connue de fabrication de bicarbonate de métal alcalin.

On connaît par ailleurs une technique pour la production d'ammoniac par décomposition de chlorure d'ammonium, selon laquelle on mélange une solution aqueuse de chlorure d'ammonium avec une solution organique d'une amine insoluble dans l'eau et on fait circuler un gaz inerte ou de l'anhydride carbonique à travers le mélange résultant pour en évacuer l'ammoniac produit (Central Patents Index, Basic Abstracts Journal, Section E, Week E/14, Derwent Publication Ltd., Londres (Grande-Bretagne), abrégé 26992E/14: demande de brevet JP-A-57 034 020 (TOYO SODA MFG K.K.) ).

Dans les techniques connues qui viennent d'être décrites, on recueille, à titre de sous-produit, une solution organique de chlorhydrate d'amine qu'il est souhaitable de traiter pour régénérer l'amine. A cet effet, on met habituellement en œuvre un procédé selon lequel on mélange la solution organique de chlorhydrate d'amine avec une suspension aqueuse d'oxyde ou d'hydroxyde de calcium ou de magnésium, et on recueille séparément une solution organique de l'amine régénérée et une solution aqueuse de chlorure de calcium ou de magnésium que l'on écarte (brevet GB-A-1 082 436 (KAISER ALUMINUM & CHEMICAL CORPORATION), page 3, lignes 5 à 9; Central Patents Index, Basic Abstracts Journal, Section E, Week T.49, Derwent Publication Ltd, Londres, abrégé 78430T-E: demande de brevet JP-A-7 241 237 (Israël Mining Inds. Inst. Res. & Dev.) ).

Dans ce procédé connu, la mise en œuvre d'oxyde ou d'hydroxyde de calcium ou de magnésium pour régénérer l'amine impose une opération préalable de calcination de carbonate de calcium ou de magnésium; cette opération présente l'inconvénient de requérir des fours de calcination coûteux et d'occasionner une dépense énergétique onéreuse.

L'invention vise à remédier à cet inconvénient en fournissant un procédé nouveau et économique pour la régénération de solutions organiques de bases organiques azotées à partir de leur chlorhydrate, notamment pour la régénération d'amines à partir de chlorhydrate d'amines, ce procédé n'impliquant plus une calcination onéreuse de carbonate de calcium ou de magnésium.

En conséquence, l'invention concerne un procédé pour régénérer une solution organique d'une base organique azotée insoluble dans l'eau, à partir d'une solution organique de son chlorhydrate, selon lequel on traite la solution organique du chlorhydrate de la base, en présence d'eau, avec un composé de métal alcalino-terreux pour décomposer le chlorhydrate et former du chlorure de métal alcalino-terreux; selon l'invention, on sélectionne une partie au moins du composé de métal alcalino-terreux parmi les carbonates.

Dans le procédé selon l'invention, la base organique azotée est, par définition, tout réactif organique azoté insoluble dans l'eau, qui présente un caractère basique suffisant pour réagir avec le chlorure d'hydrogène en formant du chlorhydrate de la base.

Dans le procédé selon l'invention, le solvant de la solution organique de la base organique azotée doit être choisi de telle sorte qu'il soit insoluble dans l'eau et les solutions aqueuses et dissolve le chlorhydrate de la base.

Le composé de métal alcalino-terreux a pour fonction de décomposer le chlorhydrate de la base en libérant la base. Selon l'invention, une partie au moins dudit composé est du carbonate de métal alcalino-terreux.

Le carbonate de métal alcalino-terreux utilisé dans le procédé selon l'invention peut dériver de tout métal du groupe IIa du tableau périodique des éléments. On utilise de préférence du carbonate de calcium, du carbonate de magnésium ou un mélange de carbonate de calcium et de carbonate de magnésium tel que la dolomie. Le calcaire broyé convient spécialement bien.

Il est souhaitable que le carbonate de métal alcalino-terreux soit mis en œuvre à l'état broyé. Sa granulométrie n'est pas critique. En pratique, il est souhaitable qu'il soit mis en œuvre à l'état de particules dont le diamètre moyen n'excède pas 25 mm, de préférence 10 mm. La sélection de poudres dont le diamètre n'excède pas 1 mm est spécialement avantageuse.

En sélectionnant une partie au moins du composé de métal alcalino-terreux parmi les carbonates, le procédé selon l'invention fait l'économie d'une opération de calcination de ces carbonates. Toutes autres choses égales, l'économie est d'autant plus importante que la quantité relative de carbonate de métal alcalino-terreux est importante. En pratique, il est souhaitable que le composé de métal alcalino-terreux soit constitué pour au moins 50% de son poids, de préférence pour plus de 75% de son poids, par du carbonate de métal alcalino-terreux; le solde peut alors consister par exemple en oxyde ou en hydroxyde de métal alcalino-terreux.

On préfère, selon une forme de réalisation particulière de l'invention, que la totalité du composé de métal alcalino-terreux mis en œuvre soit à l'état de carbonate. Cette forme de réalisation de l'invention apporte ainsi l'avantage supplémentaire de permettre de s'affranchir totalement d'une installation de calcination de carbonate de métal alcalino-terreux. Dans cette forme de réalisation de l'invention le carbonate de métal alcalino-terreux peut éventuellement être en excès par rapport à la quantité stoechiométrique correspondant à la quantité de chlorhydrate de la base à régénérer.

La sélection de la température optimum d'exécution du procédé dépend de divers paramètres, notamment de la base organique azotée, du carbonate de métal alcalino-terreux sélectionné et de sa granulométrie. En règle générale, il est souhaitable qu'elle soit supérieure à 50 °C, et il convient qu'elle n'excède pas une valeur au-delà de laquelle la base organique azotée est instable et risque d'être dissociée. Les températures comprises entre 50 et 230 °C sont conseillées, notamment dans le cas où la base organique azotée est une amine; celles comprises entre 10 et 200 °C et tout spécialement entre 80 et 180 °C sont préférées, notamment dans le cas d'alkylamines primaires.

Dans le procédé selon l'invention il convient de mettre en œuvre quantité d'eau suffisante pour dissoudre la totalité du chlorure de métal alcalino-terreux formé. Il s'avère souhaitable de mettre en œuvre un excès d'eau, de manière que la solution aqueuse résultante contienne au maximum 4 moles de chlorure de métal alcalino-terreux par kg; les teneurs inférieures à 2 moles/kg sont préférées.

A l'issue du traitement de la solution organique de chlorhydrate d'amine avec le composé de métal alcalino-terreux, on recueille une phase organique et une phase aqueuse non miscibles, la phase organique comprenant la base organique régénérée et la phase aqueuse comprenant le chlorure de métal alcalino-terreux. La séparation des deux phases peut être opérée par tout moyen connu approprié, tel qu'une décantation par gravité ou par centrifugation. On peut utiliser le procédé décrit dans la demande de brevet français 8 307 226 (SOLVAY & Cie).

Le procédé selon l'invention s'applique, d'une manière générale, aux bases organiques azotées qui sont insolubles dans l'eau et capables de fixer le chlorure d'hydrogène pour former du chlorhydrate de la base, par exemple aux imines insolubles dans l'eau et leurs dérivés, aux sels d'ammonium quaternaire insolubles dans l'eau et aux amines et aux dérivés aminés insolubles dans l'eau. Il s'applique indifféremment aux amines primaires, secondaires ou tertiaires et, de manière avantageuse, aux alkylamines primaires comprenant plus de 7 atomes de carbone dans leur molécule, par exemple entre 10 et 30 atomes de carbone.

Le procédé selon l'invention trouve une application spécialement avantageuse pour la régénération de solutions organiques d'amines au départ de leur chlorhydrate, dans la fabrication de bicarbonate de sodium par la technique aux amines décrite plus haut.

L'invention concerne dès lors aussi un procédé de fabrication de bicarbonate de métal alcalin, selon lequel on traite du chlorure de métal alcalin, en présence d'eau, avec un gaz contenant de l'anhydride carbonique et une solution organique d'une base organique azotée insoluble dans l'eau, on recueille une suspension aqueuse de bicarbonate de métal alcalin et une solution organique de chlorhydrate de la base organique azotée, on traite la suspension aqueuse pour en extraire le bicarbonate de métal alcalin qu'elle contient et on régénère la solution organique de la base organique azotée à partir de la solution organique de chlorhydrate, au moyen du procédé selon l'invention.

Dans le procédé de fabrication de bicarbonate de métal alcalin selon l'invention, on utilise avantageusement, pour la base organique azotée, une amine primaire insoluble dans l'eau, et plus spécialement une alkylamine primaire. Des alkylamines primaires préférées sont celles comprenant plus de 7 atomes de carbone dans leur molécule.

Dans une forme de réalisation avantageuse du procédé de fabrication de bicarbonate de métal alcalin selon l'invention, on recycle dans le gaz, de l'anhydride carbonique généré pendant la réaction du carbonate de métal alcalino-terreux avec la solution organique de chlorhydrate de la base organique azotée.

Le procédé de fabrication de bicarbonate de métal alcalin selon l'invention trouve une application intéressante pour la production de bicarbonate de sodium à partir de chlorure de sodium.

L'invention concerne dès lors également du carbonate de sodium obtenu par calcination de bicarbonate de sodium produit au moyen du procédé selon l'invention.

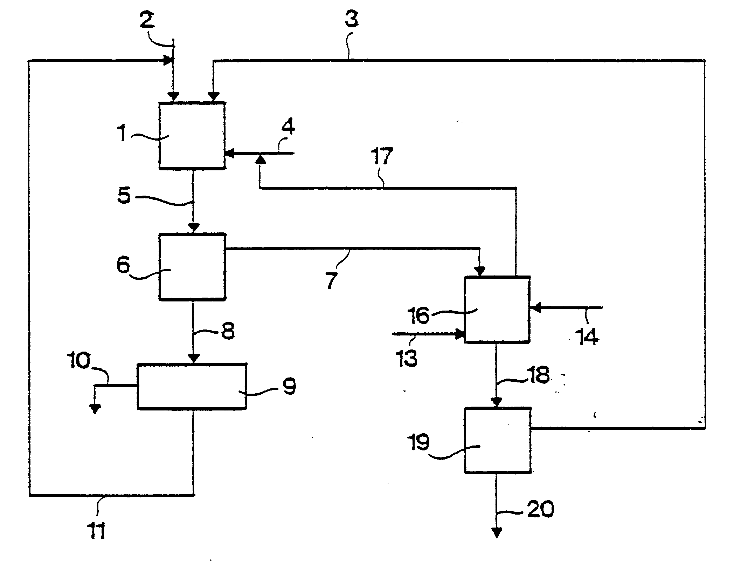

Des particularités et détails de l'invention ressortiront de la description suivante de la figure unique du dessin annexé, qui représente le schéma général d'une installation pour la production de bicarbonate de sodium au moyen d'une forme d'exécution particulière du procédé de fabrication de bicarbonate de sodium selon l'invention.

L'installation représentée à la figure comprend une chambre de cristallisation 1 qui est alimentée, de manière continue, avec une solution aqueuse sensiblement saturée de chlorure de sodium ou un brouet aqueux de chlorure de sodium 2, une solution organique d'amine primaire 3, insoluble dans la solution aqueuse de chlorure de sodium et un gaz contenant de l'anhydride carbonique 4. La solution organique d'amine primaire peut par exemple être une solution à 50% en poids d'alkylamine primaire dans du xylène, telle que, par exemple, celle connue sous la marque PRIMENE JMT (Rohm & Haas) qui comprend entre 18 et 24 atomes de carbone dans sa molécule. Le gaz 4 est de préférence un gaz riche en anhydride carbonique, contenant au moins 60% en poids d'anhydride carbonique.

Dans la chambre de cristallisation 1, du bicarbonate de sodium cristallise et l'amine est convertie en chlorhydrate d'amine.

On soutire de la chambre de cristallisation 1, un liquide 5 constitué d'un mélange de cristaux de bicarbonate de sodium, d'une eau mère de la cristallisation et d'une solution organique de chlorhydrate d'amine. Ce liquide 5 est transféré dans une chambre de décantation 6, où on sépare, par gravité, la solution organique de chlorhydrate d'amine 7 et un brouet aqueux 8. Ce dernier est envoyé dans un dispositif d'essorage ou de filtration 9, où on recueille séparément le bicarbonate de sodium solide 10 et l'eau mère 11. Celle-ci est recyclée dans la chambre de cristallisation 1 après y avoir ajouté du chlorure de sodium. Le bicarbonate de sodium solide 10 peut être envoyé dans un four de calcination, non représenté, pour produire du carbonate de sodium.

La solution organique de chlorhydrate d'amine 7 est traitée conformément au procédé selon l'invention, pour régénérer la solution organique d'amine. A cet effet, la solution organique de chlorhydrate d'amine 7 est introduite dans une chambre de réaction 16 que l'on alimente par ailleurs avec de l'eau 13 et du calcaire broyé 14. On fait régner une température d'environ 130 °C dans la chambre 16 et on y soumet l'eau, le calcaire et la solution organique à un brassage. Le chlorhydrate d'amine réagit avec le carbonate de calcium, en régénérant l'amine qui passe en solution organique et en formant de l'anhydride carbonique et du chlorure de calcium qui passe en solution aqueuse. La chambre 16 est maintenue sous pression pour limiter une ébullition des solutions organique et aqueuse qui s'y trouvent.

On soutire hors de la chambre de réaction 16, d'une part, l'anhydride carbonique formé 17, que l'on recycle dans le courant de gaz 4 et, d'autre part, un mélange liquide 18 comprenant la solution organique de l'amine régénérée et la solution aqueuse de chlorure de calcium. Ce mélange 18 est transféré dans une chambre de décantation 19, où s'opère la séparation des phases aqueuse et organique du mélange 18. On recueille de la sorte, d'une part, la solution organique d'amine 3, que l'on recycle dans la chambre de cristallisation 1 et, d'autre part, un liquide résiduaire aqueux 20 contenant du chlorure de calcium dissous.

Dans le procédé qui vient d'être décrit en référence au dessin, la quantité de calcaire 14 mise en œuvre peut être réglée pour qu'il y corresponde une quantité de carbonate de calcium en léger excès par rapport à la quantité stoechiométrique nécessaire pour décomposer la totalité du chlorhydrate d'amine introduit dans la chambre 16 par la solution organique 7. La quantité d'eau 13 doit être suffisante pour dissoudre la totalité du chlorure de calcium formé dans la chambre 16. On règle de préférence la quantité d'eau 13 mise en œuvre pour que le liquide résiduaire 20 contienne moins de 2 moles de chlorure de calcium par kg.

Dans la chambre de réaction 16, la réaction de régénération de l'amine peut être incomplète; la solution organique d'amine 3 contient alors un résidu de chlorhydrate d'amine qui circule en navette dans l'installation.

Les exemples d'application qui vont suivre ont trait à des essais de régénération de solutions organiques d'amines au départ de leur chlorhydrate, en appliquant le procédé selon l'invention. Dans ces essais, on a traité une solution organique de chlorhydrate d'amine insoluble dans l'eau avec une suspension aqueuse de carbonate de calcium, dans différentes conditions de travail et on a mesuré le rendement de régénération de l'amine à partir du chlorhydrate d'amine.

L'amine mise en œuvre était l'alkylamine primaire PRIMENE JMT (Rohm & Haas), qui comprend 18 à 24 atomes de carbone dans sa molécule. Pour le solvant de la solution organique, on a utilisé un solvant organique aliphatique connu sous la marque SHELLSOL K (Shell). L'eau entraînée avec l'anhydride carbonique a été condensée et recyclée.

Dans les exemples, le rendement de la régénération exprime la quantité d'amine formée au cours du procédé, par quantité unitaire de chlorhydrate d'amine de la solution organique de départ.

Exemple 1

On a mis en œuvre une solution organique contenant, par kg, 0,064 mole d'amine et 1,272 mole de chlorhydrate d'amino. On a mélangé 700 g de cette solution organique avec 350 g d'eau et 50 g de calcaire présentant un diamètre moyen de particule inférieur à 0,1 mm et contenant 96,5% en poids de carbonate de calcium.

Le mélange a été soumis à un brassage pendant 155 minutes, la température étant maintenue à 118 °C et la pression absolue à 1,5 bar.

A l'issue du traitement, on a recueilli une phase organique pesant 671,6 g et contenant, par kg, 1,226 mole d'amine et 0,160 mole de chlorhydrate d'amine. Le rendement de la régénération de l'amine à partir du chlorhydrate d'amine de la solution organique de départ a ainsi été égal à 87,5% molaire.

Exemple 2

On a mis en œuvre une solution organique contenant, par kg, 0,068 mole d'amine et 1,265 mole de chlorhydrate d'amine. On a mélangé 1050 g de cette solution organique avec 600 g d'eau et 75 g de calcaire présentant un diamètre moyen de particule inférieur à 0,1 mm et contenant 96,5% en poids de carbonate de calcium.

Le mélange a été soumis à un brassage pendant 60 minutes, la température étant maintenue à environ 132,5 °C et la pression absolue à 2,8 bar.

A l'issue du traitement, on a recueilli une phase organique pesant 1004,4 g et contenant, par kg, 1,318 mole d'amine et 0,092 mole de chlorhydrate d'amine. Le rendement de la régénération a ainsi été égal à 94,5% molaire.

**Exemple 3**

On a poursuivi l'essai de l'exemple 4 pour que la durée du mélange soit de 90 minutes. La phase organique recueillie à l'issue de l'essai pesait 1002,6 g et contenait, par kg, 1,365 mole d'amine et 0,044 mole de chlorhydrate d'amine. Dans cet essai, le rendement de régénération de l'amine à partir du chlorhydrate d'amine de la solution organique de départ a donc été égal à 98% molaire.

**Revendications**

1. Procédé pour régénérer une solution organique d'une base organique azotée insoluble dans l'eau, à partir d'une solution organique de son chlorhydrate, selon lequel on traite la solution organique du chlorhydrate de la base (7), en présence d'eau (13), avec un composé de métal alcalino-terreux (14), pour décomposer le chlorhydrate et former du chlorure de métal alcalino-terreux, caractérisé en ce qu'on sélectionne une partie au moins du composé de métal alcalino-terreux (14) parmi les carbonates.

2. Procédé selon la revendication 1, caractérisé en ce qu'on exécute le traitement de la solution organique du chlorhydrate de la base (7) avec le carbonate de métal alcalino-terreux (14) à une température comprise entre 50 et 230 °C.

3. Procédé selon la revendication 1 ou 2, caractérisé en ce que le carbonate de métal alcalino-terreux (14) mis en œuvre est du calcaire broyé.

4. Procédé selon l'une quelconque des revendications 1 à 3, caractérisé en ce qu'on met en œuvre une quantité d'eau (13) suffisante pour dissoudre la totalité du chlorure de métal alcalino-terreux et former une solution aqueuse (20) contenant au maximum 4 moles de chlorure de métal alcalino-terreux par kg.

5. Procédé selon l'une quelconque des revendications 1 à 4, caractérisé en ce que la totalité du composé de métal alcalino-terreux (14) est mise en œuvre à l'état de carbonate.

6. Procédé selon l'une quelconque des revendications 1 à 5, caractérisé en ce que, dans le cas où la base organique azotée est une amine, on exécute le traitement de la solution organique de son chlorhydrate (7) avec le carbonate de métal alcalino-terreux (14) à une température comprise entre 70 et 200 °C.

7. Procédé de fabrication de bicarbonate de métal alcalin, selon lequel on traite du chlorure de métal alcalin (2) en présence d'eau avec un gaz contenant de l'anhydride carbonique (4) et une solution organique d'une base organique azotée (3) insoluble dans l'eau, on recueille une suspension aqueuse de bicarbonate de métal alcalin (8) et une solution organique de chlorhydrate de la base organique azotée (7), on traite la suspension aqueuse (8) pour en extraire le bicarbonate de métal alcalin solide (10) qu'elle contient et on fait réagir la solution organique de chlorhydrate de la base organique (7), avec un composé de métal alcalino-terreux (14) en présence d'eau (13), pour régénérer la solution organique de la base organique azotée (3) et libérer un liquide aqueux (20) contenant du chlorure de métal alcalino-terreux dissous, caractérisé en ce qu'on sélectionne une partie au moins du composé de métal alcalino-terreux (14) parmi les carbonates.

8. Procédé selon la revendication 7, caractérisé en ce qu'on recycle dans le gaz précité (4), de l'anhydride carbonique (17) libéré pendant la réaction de la solution organique du chlorhydrate de la base (7) avec le carbonate de métal alcalino-terreux (14).

9. Procédé selon la revendication 7 ou 8, caractérisé en ce qu'on sélectionne la base organique azotée (3) parmi les alkylamines primaires insolubles dans l'eau.

**Patentansprüche**

1. Verfahren zur Regenerierung einer organischen Lösung von einer wasserunlöslichen organischen Stickstoffbase, ausgehend von einer organischen Lösung deren Chlorhydrats, wonach man die organische Lösung des Chlorhydrats der Base (7) in Anwesenheit von Wasser (13) mit einer Erdalkaliverbindung (14) behandelt, um das Chlorhydrat zu zersetzen und ein Erdalkalichlorid zu bilden, dadurch gekennzeichnet, dass man zumindest einen Teil der Erdalkaliverbindung (14) unter den Carbonaten auswählt.

2. Verfahren nach Anspruch 1, dadurch gekennzeichnet, dass man die Behandlung der organischen Lösung des Chlorhydrats der Base (7) mit dem Erdalkalicarbonat (14) bei einer Temperatur zwischen 50 und 230 °C durchführt.

3. Verfahren nach Anspruch 1 oder 2, dadurch gekennzeichnet, dass das eingesetzte Erdalkalicarbonat (14) zerkleinerter Kalkstein ist.

4. Verfahren nach einem der Ansprüche 1–3, dadurch gekennzeichnet, dass man eine Wassermenge (13) anwendet, die ausreichend ist, um die Gesamtmenge des Erdalkalichlorids zu lösen und eine wässrige Lösung (20) zu bilden, die höchstens 4 Mole Erdalkalichlorid je kg enthält.

5. Verfahren nach einem der Ansprüche 1–4, dadurch gekennzeichnet, dass die Gesamtmenge der Erdalkaliverbindung (14) als Carbonat zum Einsatz gelangt.

6. Verfahren nach einem der Ansprüche 1–5, dadurch gekennzeichnet, dass im Fall, dass die organische Stickstoffbase ein Amin ist, man die Behandlung der organischen Lösung deren Chlorhydrats (7) mit dem Erdalkalicarbonat (14) bei einer Temperatur zwischen 70 und 200 °C durchführt.

7. Verfahren zur Herstellung von Alkalimetallbicarbonat, wonach man Alkalimetallchlorid (2) in Anwesenheit von Wasser mit einem Gas behandelt, welches Carbonsäureanhydrid (4) enthält und einer organischen Lösung einer organischen Stickstoffbase (3), welche in Wasser unlöslich ist, man eine wässrige Suspension des Alkalimetallbicarbonats (8) und eine organische Lösung des Chlorhydrats der organischen Stickstoffbase (7) sammelt, man die wässrige Suspension (8) behandelt um das feste Alkalimetallbicarbonat (10) welches sie enthält zu extrahieren und man die organische Lösung des Chlorhydrats der organischen Base (7) zur Umsetzung bringt mit einer Erdalkalimetallverbindung (14) in Anwesenheit von Wasser (13) um die organische Lösung der organischen Stickstoffbase (3) zu regenerieren und eine wässrige Flüssigkeit (20) freizusetzen, welche gelöstes Erdalkalimetallchlorid enthält, dadurch gekennzeichnet, dass man zumindest einen Teil der Erdalkalimetallverbindung (14) unter den Carbonaten auswählt.

8. Verfahren nach Anspruch 7, dadurch gekennzeichnet, dass man in dem vorerwähnten Gas (4) das Carbonsäureanhydrid (17), welches während der Reaktion der organischen Lösung des Chlorhydrats der Base (7) mit dem Erdalkalimetallcarbonat (14) freigesetzt wird, im Kreislauf zu führen.

9. Verfahren nach Anspruch 7 oder 8, dadurch gekennzeichnet, dass man die organische Stickstoffbase (3) unter den wasserunlöslichen, primären Alkylaminen auswählt.

## Claims

1. Process for regenerating an organic solution of a water-insoluble nitrogenous organic base from an organic solution of its hydrochloride, in which the organic solution of the base hydrochloride (7) is treated, in the presence of water (13), with an alkaline-earth metal compound (14), to decompose the hydrochloride and form the alkaline-earth metal chloride, characterized in that at least a part of the alkaline-earth metal compound (14) is chosen from the carbonates.

2. Process according to Claim 1, characterized in that the treatment of the organic solution of the base hydrochloride (7) with the alkaline-earth metal carbonate (14) in carried out at a temperature of between 50 and 230 °C.

3. Process according to Claim 1 or 2, characterized in that the alkaline-earth metal carbonate (14) employed is ground limestone.

4. Process according to any one of Claims 1 to 3, characterized in that a quantity of water (13) es employed which is sufficient to dissolve all of the alkaline-earth metal chloride and form an aqueous solution (20) containing at most 4 moles of alkaline-earth metal chloride per kg.

5. Process according to any one of Claims 1 to 4, characterized in that all of the alkaline-earth metal compound (14) is employed in the form of carbonate.

6. Process according to any one of Claims 1 to 5, characterized in that, in the case where the nitrogenous organic base is an amine, the treatment of the organic solution of its hydrochloride (7) with the alkaline-earth metal carbonate (14) is carried out at a temperature of between 70 and 200 °C.

7. Process for manufacturing alkali metal bicarbonate, according to which alkali metal chloride (2) is treated in the presence of water with a gas containing carbon dioxide (4) and an organic solution of a waterinsoluble nitrogenous organic base (3), an aqueous suspension of alkali metal bicarbonate (8) and an organic solution of hydrochloride of the nitrogenous organic base (7) are collected, the aqueous suspension (8) is treated to extract therefrom the solid alkali metal bicarbonate (10) which it contains and the organic solution of hydrochloride of the organic base (7) is reacted with an alkaline-earth metal compound (14) in the presence of water (13) to regenerate the organic solution of the nitrogenous organic base (3) and to liberate an aqueous liquid (20) containing the dissolved alkaline-earth metal chloride, characterized in that at least a part of the alkaline-earth metal compound (14) is chosen from the carbonates.

8. Process according to Claim 7, characterized in that carbon dioxide (17) liberated during the reaction of the organic solution of the base hydrochloride (7) with the alkaline-earth metal carbonate (14) is recycled with the abovementioned gas (4).

9. Process according to Claim 7 or 8, characterized in that the nitrogenous organic base (3) is chosen from water-insoluble primary alkylamines.